Europäisches Patentamt

(19) European Patent Office

Office européen des brevets

(11) Publication number: **0 227 155**
A2

(12) # EUROPEAN PATENT APPLICATION

(21) Application number: 86202136.7

(22) Date of filing: 02.12.86

(51) Int. Cl.⁴: **A 01 K 1/01**
A 01 C 3/00

(30) Priority: 07.12.85 NL 8503380

(43) Date of publication of application:
01.07.87 Bulletin 87/27

(84) Designated Contracting States:
AT BE CH DE ES FR GB GR IT LI LU NL SE

(71) Applicant: Steggink, Marinus Gerhardus
Jacob Obrechtstraat 22
NL-5216 GR 's-Hertogenbosch(NL)

(72) Inventor: Steggink, Marinus Gerhardus
Jacob Obrechtstraat 22
NL-5216 GR 's-Hertogenbosch(NL)

(74) Representative: Noz, Franciscus Xaverius, Ir. et al,
Algemeen Octrooibureau P.O. Box 645
NL-5600 AP Eindhoven(NL)

(54) Device and method for separating manure and the further processing thereof.

(57) Method for separating manure in houses in which animals are kept, by collecting and separating the manure under the grid, whereby the solid substances are separated from the liquid substances by leading the manure under the grid across a static filtering means, centrally collecting and discharging the liquid substances and removing the solid substances from the filtering means at intervals.

FIG. 1

EP 0 227 155 A2

-1-

Device and method for separating manure and the further processing thereof.

The invention relates to a device for separating manure. The invention furthermore relates to a method for separating manure and to the further processing of the solid substances in the manure.

Intensive cattle farming has created an enormous surplus of manure, especially in certain parts of the Netherlands, which manure can no longer be spread on the land, as has been done up to now. The too intensive manuring of farming land has even resulted in problems with regard to the pollution of the groundwater. Now it is no longer possible to discharge said manure from the stables in which pigs and calves are bred and also from the poultry farms in the usual manner, this manure is stored in silos until a process has been found to process this manure. The transport of said manure to areas where it would be possible to spread the manure on the land is too costly and the industrial processing of the slurry has not yet been carried out successfully. Biogas installations have a low efficiencey and the remaining substances still contain too many undesired components such as heavy metals, phosphates and other constituents which are harmful for the environment.

Various methods have been suggested for industrially processing the slurry present in the silos, but it will be necessary to tackle the problem closer to the source by already effecting a separation into solid and liquid substances in the stable. This has been indicated by Mr W. Kroodsma in an article mentioned in "Boerderijbouw en Inrichting", September 1985, pp. 69-71. In said article mention is made of an installation placed in the pit under the grid on which the animals are, said installation comprising a conveyor belt also having a filtering action, through which a separation is obtained between the solid manure and the liquid substances, indicated as liquid manure, whereby the solid substances are discharged by means of the filtering conveyor belt. This proposed system is often clogged up or develops other technical malfunctions which then have to be removed in the pit under the grid, whilst it is difficult and nearly impossible to stop the production of the manure, which interferes with the system. The indicated disadvantages with this known system can be removed by applying a method according to the invention as mentioned in the preamble, which method is characterised in that the solid substances are separated from the liquid substances by leading the manure under the grid across a static filtering means, collecting and discharging the liquid substances centrally and removing the solid substances from the filtering means at regular intervals.

The device for carrying out such a method comprises a grid floor of a stable for animals and under the grid floor a pit for receiving the manure, which installation is characterised in that it comprises a static filtering means under which there is provided a central discharge for collecting the substances which pass the filtering means and above which there are provided means for periodically removing the solid substances from the filtering means. Preferably the filtering means is a system of adjacent bars with the advantage that cloggings hardly occur, if at all. However, the filtering means may also be a grid, perforated plate or the like having a filtering action, which can be scraped off and does not clog easily. Besides or instead of such a grid or perforated plate it is also possible to use a foamlike, compressible material such as polyurethane. A foam on the basis of polyurethane which can be applied for this purpose is "Bulpren", marketed by Recticil, the Netherlands.

The collected solid substances can dry further at a certain spot in the pit, which drying process can be stimulated by means of circulating air which is required in the stables, after which the solid manure substances can be compressed to pellets by means of a press which will be more fully described hereinafter. The solid substances can also be collected outside the pit, whereby it will be possible to have the liquid substances run into the pit and to collect them via sink holes.

The invention will be more fully explained hereinafter with reference to the following description, whereby reference is made to the accompanying drawing, in which:

fig 1 is a diagrammatic section of the device according to the invention,

fig 2 is a section II-II in fig 1,

fig 3 is a section of a filtering means whereby a foamlike material has been used,

fig 4 is a diagrammatic illustration of the principle of the press, and

fig 5 is a section V-V in fig 4.

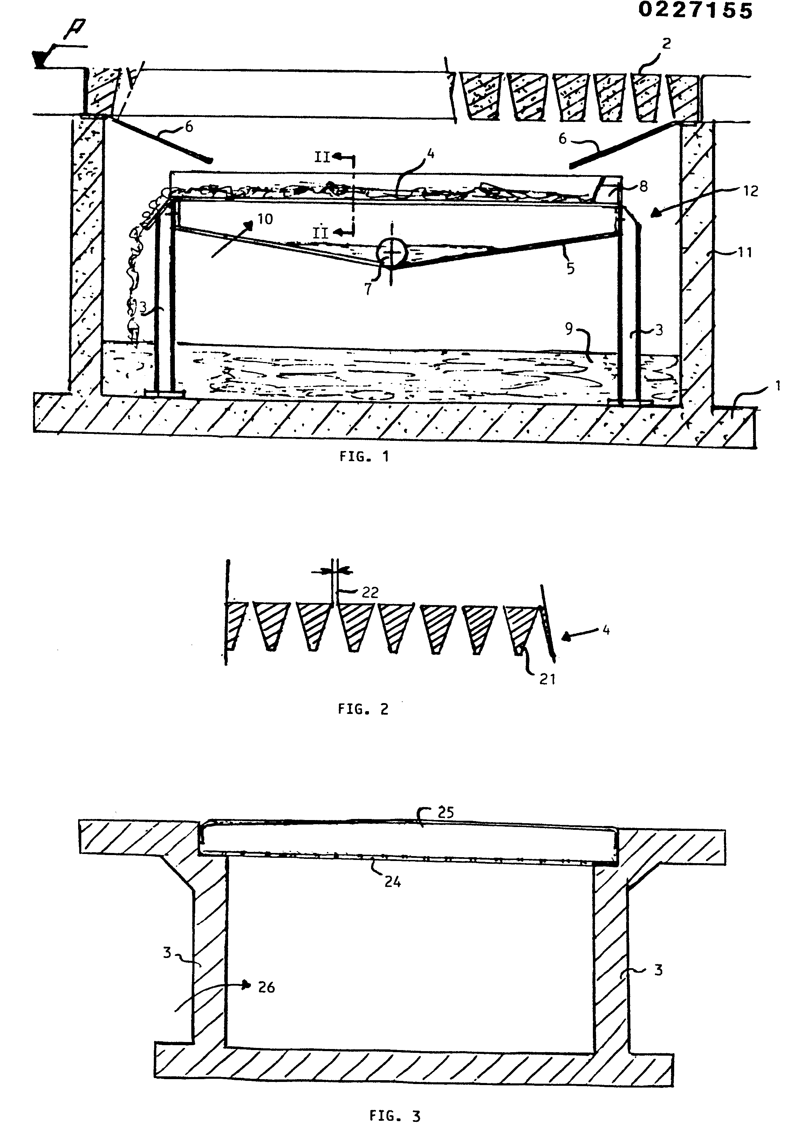

Fig 1 illustrates a section of a grid 2 forming the floor in a stable, under which grid a pit 12 has been formed comprising a floor 1 and upright walls 11. In the pit 12 thus formed supports 3 are provided for the mounting of the container 10 comprising a system of filtering bars 4 and a closed bottom 5, being a preferential embodiment of the installation under consideration. The manure which fall through the grid 2 is guided towards the system of filtering bars 4 via baffle-plates 6, by means of which bars a separation between solid and liquid manure substances are collected on the system of filtering bars and the liquid substance, the liquid manure, runs through the system of filtering bars and is collected in the container 10. In container 10 a duct or pipe 7 is provided by means of which the liquid manure can be discharged or pumped off. The solid substances which remain behind on the system of filtering bars 4 are periodically removed from the system of filtering bars by means of a sliding or scraping means 8 and collected in the pit 12. In fig 1 the solid manure substances are indicated with 9. The solid manure substances 9 can be further dried in the pit by means of circulating air required for the stables and periodically discharged and compressed to pellets. According to another embodiment it is also possible that the solid substances are scraped off the filtering bars 4 and taken outside the pit for further drying and processing. In that case the liquid manure can be collected in the pit so that the closed bottom 5 of container 10 is superfluous.

Fig 2 illustrates a section II-II in fig 1 of the system of filtering bars. Such a system of bars 21 is commercially obtainable and its gap width 22, illustrated in fig 2, can be varied depending on the kind of manure, although in practice a gap width of 0.75 mm has appeared to be suitable for use in pig houses.

Another preferential embodiment for a device for separating the solid and liquid substances is illustrated in fig 3 whereby on the supports 3 there is provided a perforated support plate 24 and on it a polyurethane foam layer 25 with a thickness of a few cm. Said device or container can be placed in pit 12 as illustrated in fig 1 whereby the liquid is absorbed by the foam layer 25 and the solid substances are scraped off the foam, as mentioned in connection with fig 1. With the embodiment as illustrated in fig 3 the scraping means 8 may also be a driving-out means with which the liquid manure is driven out of the foam and collected in room 26, whilst the solid matter is scraped off from the upper surface of the foam.

The importance of the separated obtaining of the solid substances and the liquid manure will appear from the results of the analysis of the solid manure and the liquid manure, as mentioned in the table, which show that the liquid manure contains hardly any phosphate and only a very small quantity of heavy metals such as copper The constituents which are harmful for the environment are mainly in the solid manure and by separating said solid manure from the liquid manure a product, in the form of pellets, is obtained which can be handled easily, whilst the liquid manure can be processed industrially in a simple manner like sewage water or spread on the land in larger quantities. Although the proposed method and device will not solve the huge slurry-problem totally, they offer a first step towards a device and method which can be easily applied in practice, so that the problem can be greatly reduced. With the device and method according to the invention it is prevented, therefore, that the liquid and the solid manure substances are first mixed and need to be separated again afterwards, which separation is much more difficult after the mixture has been stored in silos for a prolonged period of time or has remained in the pit under the grid for a longer period, than when the separation is effected immediately after the solid matter and the urine have run through the grid.

Table

Composition of solid manure substances and liquid manure after separation by a system of filtering bars with a gap width of approximately 0.8 mm.

|  | solid manure | liquid manure |
|---|---|---|
| dry matter (%) | 32.50 | 1.92 |
| ash of dry matter (%) | 25.70 | 63.10 |
| N (%) | 1.24 | 0.34 |
| $NH_4$-N (%) | 0.34 | 0.35 |
| $P_2O_5$ (%) | 1.64 | 0.05 |
| $K_2O$ (%) | 0.85 | 0.62 |
| CaO (%) | 1.45 | 0.04 |
| MgO (%) | 0.48 | 0.02 |
| Cu (_pm) | 197 | 2.50 |
| pH | -- | 9.1 |

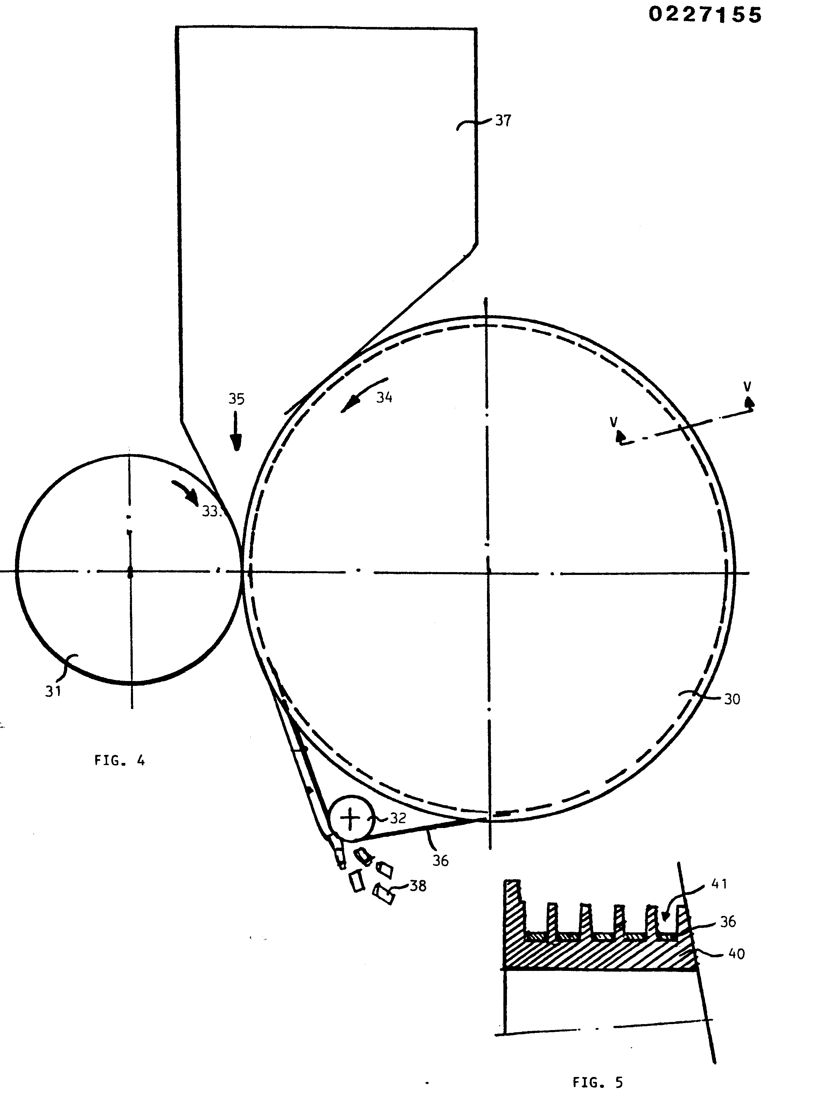

The solid manure 9 can be collected from the pit after partial drying and compressed into pellets by means of a press as illustrated in fig 4. The press comprises a rotating drum 30 provided with grooves or slots 41 as illustrated in fig 4. Beside the rotating drum 40 there is provided a rotating drum 31 rotating in opposite direction to drum 30, whereby the material which is supplied from storage container 37 to the clearance between the two rotating drums is pressed into the grooves 41, so that a granular form is obtained therein. In the grooves 41, however, a belt 36 has first been placed, rotating about cilinder 32, by means of which the pellets are pressed out of the grooves, thus simply solving the problem of releasing the pellets from the grooves in drum 30. Fig 5 illustrates a section V-V of fig 4, clearly indicating the groove construction 41 in the drum circumference 40, whereby the belt 36 is placed in the grooves 41. In fig 4 the pellets are indicated with 38 and the direction of rotation of drum 31 and drum 30 with the arrows 33 and 34 respectively. Arrow 35 indicates the supply of the material to be compressed. It will be apparent that this press is not restricted to use for compressing solid manure substances but that it can also be used on an industrial scale for the compression into pellets of somewhat humid materials which are otherwise difficult to compress, at least difficult to release from the press.

-1-

CLAIMS

1. Method for separating manure in houses in which animals are kept, by collecting and separating the manure under the grid, characterised in that the solid substances are separated from the liquid substances by leading the manure under the grid across a static filtering means, centrally collecting and discharging the liquid substances and removing the solid substances from the filtering means at intervals.

2. Method according to claim 1, characterised in that the filtering means is constructed from filtering bars from which the solid substances are periodically scraped.

3. Method according to claim 1, characterised in that the filtering means comprises a foamlike, compressible material which holds the liquid substances and keeps the solid substances on the surface to enable scraping off.

4. Method according to claim 3, characterised in that a pressure is regularly exerted on the foamlike material so that the absorbed liquid is driven out.

5. Device for applying a method according to claim 1, comprising a grid floor of an animal house and under the grid floor a pit for receiving the manure, in which pit an installation is provided for separating the solid and liquid substances of the manure, characterised in that the installation comprises a static filtering means under which there is provided a central discharge for collecting the substances which pass the filtering means and above which there are provided means for periodically removing the solid substances from the filtering means.

6. Device as claimed in claim 5, characterised in that the filtering means is a system of filtering bars forming a container with the central discharge for receiving the liquid manure which runs through the system of filtering bars.

7. Device as claimed in claim 5, characterised in that the container is placed on supports in the pit.

8. Device according to claim 5, characterised in that the filtering means comprises a foamlike, compressible material.

9. Device according to claim 8, characterised in that the foamlike material is polyurethane.

10. Device according to claims 5-9, characterised in that the filtering means comprises a combination of foamlike material and the system of filtering bars.

11. Device according to claim 5, characterised in that the filtering means is provided with a scraping means by means of which the solid substances are removed from the filtering means to a place outside the pit and possibly with a driving-out means for the foamlike material so that the liquid manure can be collected in the pit.

12. Device for processing substances in powder form such as manure substances by compressing them into pellets, which press comprises two rotatable drums with above them a feed for the matter to be compressed, said drums being rotatable in opposite directions and one drum being provided with a grooved profile, characterised in that in the grooved profile a belt is provided which rotates about a spindle located outside the drum by means of which belt the pellets formed can be removed from the grooves.

0227155

FIG. 1

FIG. 2

FIG. 3

0227155

FIG. 4

FIG. 5